Europäisches Patentamt

European Patent Office

Office européen des brevets

(19)

(11) Veröffentlichungsnummer : **0 131 751**
**B1**

(12) **EUROPÄISCHE PATENTSCHRIFT**

(45) Veröffentlichungstag der Patentschrift :
29.07.87

(21) Anmeldenummer : 84106662.4

(22) Anmeldetag : 12.06.84

(51) Int. Cl.⁴ : **C 08 L  69/00**, C 08 L  55/02,
C 08 J  3/00, C 08 K  3/20,
C 08 K  3/26, C 08 L  27/18

(54) **Verfahren zur Herstellung flammwidriger Formmassen.**

(30) Priorität : 21.06.83 DE 3322260

(43) Veröffentlichungstag der Anmeldung :
23.01.85 Patentblatt 85/04

(45) Bekanntmachung des Hinweises auf die Patenterteilung : 29.07.87 Patentblatt 87/31

(84) Benannte Vertragsstaaten :
DE FR GB IT NL

(56) Entgegenhaltungen :
EP-A- 0 019 127
EP-A- 0 034 252
DE-A- 2 937 877
FR-A- 2 239 512
US-A- 4 339 556
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Lindner, Christian, Dr.
Riehler Strasse 200
D-5000 Köln 60 (DE)
Erfinder : Peters, Horst, Dr.
Winterberg 25
D-5090 Leverkusen 3 (DE)
Erfinder : Buekers, Josef
Kneinstrasse 58a
D-4150 Krefeld (DE)
Erfinder : Urbanneck, Bernd
Högden 15
D-4050 Mönchengladbach 2 (DE)

## Beschreibung

Gegenstand der vorliegenden Erfindung ist ein Verfahren zur Herstellung flammwidriger Formassen aus

a) 5-85 Gew.-Teilen, bezogen auf 100 Gew.-Teile a) + b) + c), eines aromatischen Polycarbonates, das gegebenenfalls bis zu 20 Mol-%, bezogen auf 100 Mol-% eingesetztes Bisphenol, eines halogenierten Bisphenols enthält,

b) 10.9-95 Gew.-Teilen, bezogen auf 100 Gew.-Teile a) + b) + c), eines SAN-Pfropfpolymerisates,

c) 0-50 Gew.-Teilen, bezogen auf 100 Gew.-Teile a) + b) + c), eines thermoplastischen Polymerisates

d) gegebenenfalls 3-15 Gew.-Teilen (pro 100 Gew.-Teile a) + b) + c)) einer organischen niedermolekularen, oligomeren oder polymeren Halogenverbindung,

e) 0,05-5 Gew.-Teilen (pro 100 Gew.-Teile a) + b) + c)) Antimontrioxid oder Antimoncarbonat,

f) 0,05-0,5 Gew.-Teilen, bezogen auf 100 Gew.-Teile der Summe von a)-f), feinteiliges Tetrafluorethylenpolymerisat mit Fluorgehalten von 65-76 Gew.-%, das dadurch gekennzeichnet ist, daß man

I) eine wäßrige Emulsion des SAN-Pfropfpolymerisates b) mit mittleren Teilchengrößen von 0,1-2 μm und gegebenenfalls eine wäßrige Emulsion des thermoplastischen Polymerisates c) mit mittleren Teilchengrößen von 0,05-0,4 μm mit einer Dispersion eines Tetrafluorethylenpolymerisates f) mit mittleren Teilchengrößen von 0,05-20 μm vermischt, so daß das Gewichtsverhältnis von b) und gegebenenfalls c) zu f) 80-99,9 zu 20-0,1 (bezogen auf die Polymerfeststoffe) ist,

II) aus dieser Mischung die Polymeren durch Koagulation isoliert und trocknet und

III) das erhaltene Gemisch, gegebenenfalls nach Granulierung, mit Polycarbonat a), den Additiven d) und e) sowie gegebenenfalls weiterem Pfropfpolymerisat b) und gegebenenfalls weiterem Vinylmonomerpolymerisat c) in der Schmelze vermischt und thermoplastisch verarbeitet.

Als halogeniertes Bisphenol zur Herstellung des Polycarbonats der Komponente a) dient beispielsweise Tetrabrombisphenol-A.

In der US-PS 3 673 278 wird beschrieben, daß man durch Zusatz von 0,1-3 Teilen Polytetrafluorethylen, das bei einer Temperatur über 330 °C gesintert worden ist und keine Fibrillen bildet, zu 100 Teilen einer Polycarbonatmischung eine Masse enthält, die feuerhemmend ist und beim Verformen weder tropft noch sich verfärbt und die excellente Oberflächeneigenschaften halt. Das Abtropfen dieser Formmassen ist jedoch nicht vollständig unterbunden.

Die EP-OS 19 127 beschreibt flammwidrige PC/ABS-Formmassen, wobei als Metallsynergisten Alkalisalze oder Erdalkalisalze verwendet werden und außerdem Stoffe benötigt werden, die das Abtropfen von Polycarbonaten reduzieren. Als solche sind beispielsweise Polytetrafluorethylene, Polysiloxane, Glasfasern oder Kohlenstofffasern genannt.

Die spezielle Einarbeitung gemäß vorliegender Erfindung wird nicht angesprochen, Formmassen mit verbesserter Oberflächenqualität sind auch nicht Ziel der Lehre der EP-OS 00 19 127.

Die Lehre der EP-OS 00 34 252 zeigt einen Weg, flammgeschützte Polycarbonat/ABS-Mischungen mit verbesserter Oberflächenqualität zu erhalten. Der Einsatz von Wismutverbindungen führt jedoch dazu, daß sich die Formmassen verfärben, insbesondere dann, wenn deren Herstellung bei 290 °C erfolgt. Gemäß vorliegender Erfindung wird daher ein anderer Weg vorgeschlagen, um flammwidrige PC/ABS-Formmassen mit guter Oberflächenqualität zu erhalten, indem unter Beibehaltung der Antimonsynergisten das Polytetrafluorethylen speziell eingearbeitet wird.

Bevorzugte aromatische Polycarbonate im Sinne der Erfindung sind Homopolycarbonate und Copolycarbonate aus einem oder mehreren der folgenden Diphenole :

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole,

wobei die Phenylreste auch Alkyl- oder Halogensubstituenten tragen lönnen. Diese und weitere geeignete Diphenole sind z. B. in den US-Patentschriften 3 028 365, 3 148 172, 3 275 601, 2 991 273, 3 271 367, 3 062 781 und 2 999 846, in den deutschen Offenlegungsschriften 1 570 703, 2 063 050, 2 063 052, 2 211 956, 2 211 957, der französischen Patentschrift 1 561 518 und der Monographie « H. Schnell, Chemistry and Physics of Polycarbonates, Interscience Publishers, New York, 1964 », beschrieben. Besonders bevorzugte Diphenole sind :

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dichlor-4-hydroxyphenyl)-propan
2,2-Bis-(3,5-dibrom-4-hydroxyphenyl)-propan.

Die besten Ergebnisse wurden bisher erhalten mit :

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, z. B. einer Schmelzumesterung aus Bisphenol und Diphenylcarbonat und in Lösung aus Bisphenolen und Phosgen. Die Lösung kann homogen sein (« Pyridinverfahren ») oder heterogen (« Zweiphasengrenzflächenverfahren »). Erfindungsgemäß sind Polycarbonate, die in Lösung, insbesondere nach dem Zweiphasengrenzflächenverfahren hergestellt worden sind, besonders geeignet.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, z. B. solchen mit drei oder mehr als drei phenolischen Hydroxygruppen verzweigt sein.

Die aromatischen Polycarbonate sollen in der Regel mittlere Gewichtsmittel-Molekulargewichte $\bar{M}_w$ von 10 000 bis über 200 000, vorzugsweise von 20 000 bis 80 000 haben (ermittelt durch Messungen der rel. Viskosität in $CH_2Cl_2$ bei 25 °C bei einer Konzentration von 0,5 Gew.-%).

SAN-Pfropfpolymerisate im Sinne der Erfindung sind insbesondere Emulsionspfropfpolymerisate von Gemischen aus 10-40 Gew.-Teilen Acrylnitril und 90-60 Gew.-Teilen Styrol und/oder α-Methylstyrol auf teilchenförmige, wenigstens partiell vernetzte Dienkautschuke oder Alkylacrylatkautschuke einer mittleren Teilchengröße von 0,1-2 μm.

Mit mittlerer Teilchengröße ist im Rahmen dieser Erfindung immer der mittlere Teilchendurchmesser $d_{50}$ gemeint, d. h. der Durchmesser, oberhalb und unterhalb dessen je 50 Gew.-% der Teilchen liegen.

Bevorzugte Dienkautschuke sind Polybutadien, Polyisopren und Butadiencopolymere mit bis zu 50 Gew.-% eincopolymerisierten Monomeren wie Acrylnitril, Styrol, Methylmethacrylat oder Butylacrylat. Die SAN-Pfropfpolymerisate enthalten bevorzugt 8-80 Gew.-% Dien-Kautschuk, insbesondere 20-60 Gew.-%. Sie sind bekannt und können hergestellt werden, indem man radikalisch in wäßriger Emulsion Monomergemisch aus Styrol und Acrylnitril auf die in wäßriger Emulsion vorliegenden, teilchenförmigen Dienkautschuke pfropfcopolymerisiert ; teilchenförmigen Dienkautschuke pfropfcopolymerisiert ; dabei fallen — nach Pfropfcopolymerisation der Monomergemische — wäßrige Emulsionen der SAN-Pfropfpolymerisate an, die anschließend, gegebenenfalls nach Stabilisierung mit phenolischen Antioxidantien, durch übliche, bekannte Koagulationsverfahren aufgearbeitet und isoliert werden. Erfindungsgemäß geeignete SAN-Pfropfpolymerisate sind auch Pfropfpolymerisate von Styrol und Acrylnitril auf Acrylatkautschuke, die sich von C1-10-Alkylacrylaten als Monomere ableiten, insbesondere von n-Butylacrylat, Hexylacrylat, Ethylhexylacrylat und Ethylacrylat. Die als Pfropfbasis für Styrol und Acrylnitril geeigneten Acrylatkautschuke können Comonomere wie Styrol, Vinylether, Butadien, Methylmethacrylat oder Vinylacetat in Mengen bis zu 40 Gew.-% eincopolymerisiert enthalten. Diese Acrylatkautschuke sind wenigstens partiell vernetzt und werden hergestellt durch radikalische Emulsionspolymerisation entsprechender Monomermischungen, gegebenenfalls in Gegenwart polyfunktioneller, als Vernetzer wirkender ethylenisch ungesättigter Monomerer, wie Divinylbenzol, Alkylenglykoldi(meth)acrylate, Triallylisocyanurat, Polyetherglykoldi(meth)acrylate. Diese Pfropfpolymerisate enthalten bevorzugt 8-80 Gew.-% Acrylatkautschuk, insbesondere 20-60 Gew.-% und können aus dem Emulsionen z. B. durch übliche Koagulierungsverfahren isoliert werden. Besonders bevorzugt sind Styrol-Acrylnitril-Pfropfpolymerisate auf Acrylatkautschukteilchen mit Kern/Mantel-Struktur.

Thermoplastische Polymerisate im Sinne der Erfindung sind Homo- oder Copolymerisate von ethylenisch ungesättigten Monomeren, deren Polymerisate harzartige, thermoplastische Eigenschaften aufweisen ; beispielhafte ethylenisch ungesättigte Monomere sind Styrol, $\alpha$-Methylstyrol, Alkylstyrol, Halogenstyrol, Acrylnitril, Methacrylnitril, Methylmethacrylat, Cyclohexylmethacrylat, Maleinsäureanhydrid, Maleinsäureester ; bevorzugte Monomere sind Styrol, $\alpha$-Methylstyrol, Acrylnitril, Methylmethacrylat und Maleinsäureanhydrid ; insbesondere bevorzugt sind Styrol-Acrylnitril-Copolymerisate, $\alpha$-Methylstyrol-Acrylnitril-Copolymerisate, Polymethylmethacrylat oder Styrol-Maleinsäureanhydrid-Copolymerisate. Diese Polymerisate besitzen Molekulargewichte von etwa 20 000 bis $2 \times 10^5$ und können z. B. durch Emulsionspolymerisation, Massepolymerisation, Fällungspolymerisation, Lösungspolymerisation oder Suspensionspolymerisation hergestellt werden. Bevorzugte Polymerisate werden radikalisch durch Emulsions- oder Massepolymerisation hergestellt.

Organische flammhemmende Halogenverbindungen d) im Sinne der Erfindung sind z. B. :

Decabromdiphenylether
Octabromdiphenyl
Octabromdiphenylether
Trichlortetrabromtoluol ;

flammwidrig ausgerüstete Polycarbonate sind z. B. solche, die 5-20 Mol.-% Tetrabrombisphenol A oder Tetrachlorbisphenol A einkondensiert enthalten.

Oligomere oder polymere flammhemmende Halogenverbindungen sind insbesondere Polykondensate oder Polycarbonate auf der Basis von Tetrabrom — bzw. Tetrachlorbisphenol A.

Die synergistischen Komponenten Antimon- oder Wismuttrioxid bzw. -carbonat werden vorzugsweise als feinteilige Pulver zur erfindungsgemäßen Herstellung der Formmasse verwendet ; als alternatives Verfahren können auch $Sb_2O_3$-Dispersionen mit SAN-Pfropfpolymeremulsionen abgemischt und gemeinsam durch Cokoagulation aufgearbeitet werden ; solche Konzentrate eignen sich dann besonders gut zur Flammwidrigkeitsausrüstung von Thermoplasten (vgl. Europäische Patentschrift 1913).

Die erfindungsgemäß geeigneten Tetrafluorethylenpolymerisate f) sind Polymere mit Fluorgehalten von 65-76 Gew.-%, vorzugsweise 70-76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Die Polymerisate f) sind bekannt. Sie können in feinteiliger Form, gewöhnlich als Pulver, verwendet werden.

(Vgl. « Vinyl and Related Polymers » von Schildknecht, Verlag John Wiley & Sons, Inc., New York, 1952, Seite 484-494 ; « Fluorpolymers » von Wall, Verlag Wiley-Interscience, Abteilung von John Wiley & Sons, Inc., New York, 1972 ; « Encyclopedia of Polymer Science and Technology », Verlag Interscience Publishers, Abteilung von John Wiley & Sons, Inc., New York, Band 13, 1970, Seite 623-654 ; « Modern Plastics Encyclopedia », 1970-1971, Band 47, Nr. 10A, Oktober 1970, Verlage McGraw-Hill, Inc., New York, Seite 134, 138 und 774 ; « Modern Plastics Encyclopedia », 1975-1976, Oktober 1975, Band 52, Nr. 10A, Verlag McGraw-Hill, Inc., New York, Seite 27, 28 und 472, und US-PS 3 671 487, 3 723 373 und 3 838 092).

Die nach dem erfindungsgemäßen Verfahren erhältlichen Formmassen verbinden gute Flammwidrigkeit (kein Abtropfen) mit guter Oberflächenbeschaffenheit (keine Schlieren) und mit guter Verarbeitbarkeit (kein Verbräunen).

Das erfindungsgemäße Verfahren wird im einzelnen wie folgt durchgeführt : Es wird zuerst eine wäßrige Emulsion (Latex) eines Pfropfpolymerisates b) mit mittleren Latexteilchengrößen von 0,1-2 μm, insbesondere 0,2-0,6 μm, mit einer feinteiligen Dispersion eines Tetrafluorethylenpolymerisates mit mittleren Dispersionsteilchengrößen von 0,05-20 μm, insbesondere von 0,08-10 μm vermischt ; geeignete Tetrafluorethylen-Dispersionen besitzen üblicherweise Feststoffgehalte von 30-70 Gew.-%, insbesondere von 50-60 Gew.-%. In der Dispersionsmischung ist das Gewichtsverhältnis Pfropfpolymerisat b) zum Polymerisat f) 99,9 : 0,1 bis 80 : 20. Anschließend wird die Dispersionsmischung wie üblich aufgearbeitet durch Koagulation mittels Zusatz von anorganischen oder organischen Salzen, Säuren, Basen oder organischen, mit Wasser mischbaren Lösungsmitteln wie Alkoholen, Ketonen, vorzugsweise bei Temperaturen von 20-150 °C, insbesondere von 50-100 °C. Falls erforderlich, kann bei 50-200 °C, bevorzugt 70-100 °C getrocknet werden.

Liegen die thermoplastischen Polymerisate c) als Latex vor, dann können die Tetrafluorethylenpolymerisate (in Form ihrer feinteiligen Dispersion) auch damit gemischt, aufgearbeitet und das Gemisch zur Herstellung der Formmassen eingesetzt werden.

Die Mischungen aus b) und f), bzw. c) und f), bzw. b) und c) und f) werden mit dem Polycarbonat a), den Additiven a) und e) sowie gegebenenfalls weiteren Tetrafluorethylenpolymerisat-freiem Pfropfpolymer b) und c) schmelzcompoundiert, bei Temperaturen von 200-330 °C in gebräuchlichen Aggregaten wie Knetern, Extrudern, Doppelwellenschnecken.

Durch Spritzguß aus den Formmassen hergestellte Formkörper haben einwandfreie Oberflächen.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind :

Gehäuseteile jeder Art (z. B. für Haushaltsgeräte wie Saftpressen, Kaffeemaschinen, Mixer) oder Abdeckplatten für den Bausektor und Teilen für den Kfz-Sektor. Sie werden außerdem auf dem Gebiet der Elektrotechnik eingesetzt, weil sie sehr gute elektrische Eigenschaften haben. Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al. Colloids. u. Z. Polymere 250 (1972) 783-796.

Beispiele

Die Beispiele 1, 4, 7, 8, 10 und 11 liegen außerhalb des Anspruchsumfangs ; sie sind Vergleichsbeispiele

A) Eingesetzte Polymerisate und Zusätze

1) Aromatisches Polycarbonat aus 10 Gew.-% Tetrabrombisphenol A und 90 Gew.-% Bisphenol A mit relativer Viskosität, gemessen in $CH_2Cl_2$ bei 25 °C, von 1,284 (0,5 gew.-%ige Lösung).

2) Oligomeres Polycarbonat aus Tetrabrombisphenol A und einem durchschnittlichen Polykondensationsgrad von 5.

3) SAN-Pfropfpolymerisat von 50 Gew.-% Styrol-Acrylnitril-Gemisch (im Gew.-Verhältnis von 72 : 28) auf 50 % teilchenförmiges Polybutadien einer mittleren Teilchengröße ($d_{50}$) von 0,4 μm erhalten durch Emulsionspolymerisation.

4) Thermoplastisches Polymerisat aus Styrol und Acrylnitril mit einem Acrylnitrilgehalt von 26 Gew.-% und einem mittleren Molekulargewicht von 60 000.

5) Polytetrafluorethylen « Teflon 702N » (Dupont) als Pulver. Das Polymer besitzt eine F-Gehalt von 73,7 Gew.-%.

6) Dispersionen von Tetrafluorethylenpolymerisat « Teflon 42N » (Dupont) ; das dispergierte Polymer besitzt einen F-Gehalt von 73,7 Gew.-%, bzw. Dispersionen von Tetrafluorethylenpolymerisat « Hostaflon TF 5032 » (Fa. Hoechst) ; dieses dispergierte Polymer besitzt einen F-Gehalt von 70,5 Gew.-%.

7) $Sb_2O_3$ (« Stibiox MS »).

8) Ruß « Black-Pearls 900 » (Fa. Cabot).

B) Herstellung der Formmassen

1) Herstellung durch direkte Compoundierung aller Komponenten :

Compoundierung auf einem Banbury-Innenkneter (Fa. Pomini-Farrel) vom Typ BR (1,2 l) oder Typ 00C (3 l) bei 230-240 °C. Die in den Tabellen angegebenen Gew.-Tle. werden direkt compoundierte.

2) Herstellung nach dem erfindungsgemäßen Verfahren :

Die Dispersion des Tetrafluorethylenpolymerisats A) 6) wurde mit der Emulsion des SAN-Pfropfpolymerisats A) 3), und evtl. der Emulsionen des thermoplastischen Polymerisates A) 4) vermischt, und mit 1,8 Gew.-%, bezogen auf Polymerfeststoff, phenolischer Antioxidantien stabilisiert. Bei 85-95 °C wird die Mischung mit einer wäßrigen Lösung von $MgSO_4$ (Bittersalz) und Essigsäure bei pH 4-5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet.

Dieses Pulver kann dann mit den weiteren Komponenten in den in B) 1) beschriebenen Aggregaten compoundiert werden.

C) Zusammensetzung der Formmassen

Tabelle 1) und 2) gibt die Zusammensetzung der Formmassen an (Angaben in Gew.-Tl.) :

(Siehe Tabellen Seite 6 ff.

Tabelle 1

| | 1 | 2 | 3 | 4 | 5 | 6 |
|---|---|---|---|---|---|---|
| Polycarbonat A) 1) | 72 | 72 | 72 | 70 | 70 | 70 |
| Polycarbonat A) 2) | 1 | 1 | 1 | 1 | 1 | 1 |
| Pfropfpolymerisat A) 3) | 11,2 | – | – | 14 | – | – |
| Polymerisat A) 4) | 16,8 | 16,8 | 16,8 | 14 | 14 | 14 |
| $Sb_2O_3$ | 2 | 2 | 2 | 2 | 2 | 2 |
| Ruß | – | – | – | 1 | 1 | 1 |
| Mischung aus 97,5 Gew.-% A) 3) und 2,5 Gew.-% Teflon 42N, hergestellt im Sinne d. Erfindung (nach B) 2)) | – | 11,2 | – | – | 14 | – |
| Mischung aus 97,5 Gew.-% A) 3) und 2,5 Gew.-% Hostaflon TF 5032, hergestellt im Sinne der Erfindung ( nach B) 2)) | – | – | 11,2 | – | – | 14 |

Die Komponenten werden in dem unter B) 1) angegebenen Aggregat compoundiert.

Tabelle 2

|  | 7 | 8 | 9 | 10 | 11 |
|---|---|---|---|---|---|
| Polycarbonat A) 1) | 70 | 70 | 70 | 70 | 70 |
| $Sb_2O_3$ | 2 | 2 | 2 | 2 | 2 |
| Teflon 702N-Pulver A) 5) | – | 0,25 | – | – | – |
| ABS [1] | 28 | 28 | – | 28 | 28 |
| Mischung aus 99 % ABS [1)2)] und 1 % Hostaflon TF 5032, hergestellt in Sinne der Erfindung (nach B) 2)) | – | – | 28 | – | – |
| Pulver [3)], gewonnen aus Dispersion Hostaflon TF 5032 | – | – | – | 0,25 | 0,1 |

[1]) ABS besteht aus 60 Gew.-Tlen. Harz A) 4) und 40 Gew.-Tlen. Pfropfpolymer A) 3), die Komponenten wurden durch Emulsionspolymerisation hergestellt, die Latices wurden vermischt und bei pH 4-5 zu einem Pulver gefällt und aufgearbeitet.

[2]) Die Latexmischung aus A) 3) und A) 4) wird mit einer Dispersion von « Hostaflon TF 5032' vermischt und dann bei pH 4-5 zu einem Pulver aufgearbeitet.

[3]) Die Dispersion « Hostaflon TF 5032 » wird koaguliert, filtriert und das Pulver bei 70 °C getrocknet.

D) Eigenschaften der Formmassen

Die Formmassen C) 1-11 werden bei 260 °C spritzgegossen (Aggregat : Werner-Pfleiderer-Schnecke DKS 275, Schließkraft 275 MP, Schneckendurchmesser 56 mm, Länge L/D-23/1).

(Siehe Tabelle Seite 8 f.)

Brandverhalten nach UL Subj. 94

| Formmasse C | 1 | 2 | 3 | 4 | 5 | 6 | 7 | 8 | 9 | 10 | 11 |
|---|---|---|---|---|---|---|---|---|---|---|---|
| 1,6 mm | V-2-/-/10 | V-O | V-O | V-2-/-/5 | V-O | V-O | V-2-1/-/9 | V-O | V-O | V-O | V-O |
| 2,5 mm | V-2-3/-/2 | V-O | V-O | V-2-/-/5 | V-O | V-O | - | - | - | - | - |
| 3,2 mm | - | - | - | - | - | - | V-2-1/-/9 | V-O | V-O | V-O | V-O |

Spritzgußformkörperbeschaffenheit[1]

| | 1 | 2 | 3 | 4 | 5 | 6 | 7 | 8 | 9 | 10 | 11 |
|---|---|---|---|---|---|---|---|---|---|---|---|
| | o.k. | o.k. | o.k. | o.k. | o.k. | o.k. | o.k. | n.i.o | o.k. | n.i.o. | n.i.o |

[1] Visuell beurteilt an größeren Gehäusen mit einem Schußgewicht von 245 g bzw. an Musterplättchen einer Größe von 40 × 60 mm und einer Dicke von 4 mm
o.k. = Oberfläche einwandfrei
n.i.o = Oberfläche ist stark gestört durch Mikrorisse.
« V-2/—/—/10 » bedeutet, daß von 10 geprüften Prüfstäben alle V-2-Klasse erreicht haben.
« V-2/—/—/5 » bedeutet, daß von 5 geprüften Prüfstäben alle V-2-Klasse erreicht haben.
« V-2/1/—/9 » bedeutet, daß von 10 geprüften Prüfstäben einer V-O-Klasse und neun V-2-Klasse erreicht haben. Die Gesamtklassifizierung bleibt in diesem Fall V-2.
« V-2-3/—/2 » bedeutet, daß von 5 geprüften Prüfstäben drei V-O-Klasse und zwei V-2-Klasse erreicht haben. Die Gesamtklassifizierung bleibt V-2.

Mechanische Eigenschaften

Bestimmt an Normkleinstäben ; Kerbschlagzähigkeit nach DIN 53 453, Vicat-B nach DIN 53460

| Formmasse C) 1 | 1 | 2 | 3 | 4 | 5 | 6 | 7 | 8 | 9 | 10 | 11 |
|---|---|---|---|---|---|---|---|---|---|---|---|
| Kerbschlagzähigkeit (kJ/m²) | 21 | 23 | 22 | 34 | 36 | 34 | 34 | 33 | 30 | 34 | 33 |
| Vicat B-Temperatur (°C) | 136 | 135 | 136 | 137 | 138 | 139 | 138 | 137 | 136 | 136 | 137 |

Wie aus den Tabellen in Abschnitt D hervorgeht, wird durch den Zusatz der kleinen Mengen Tetrafluorethylenpolymerisat die Flammwidrigkeit der Formmassen stark verbessert. Wird allerdings das Tetrafluorethylenpolymerisat als Pulver bei der Compoundierung der Komponenten eingegeben, so wird zwar auch gutes Brandverhalten erreicht, aber die Oberflächen von Formkörpern aus solchen Massen sind nicht immer einwandfrei ; sie zeigen Mikrorisse bzw. Schlieren. Werden Tetrafluorethylenpolymerisatdispersionen in dem erfindungsgemäßen Verfahren zu den Formkörpen aufgearbeitet, so lassen sich Formkörper ohne Oberflächenstörungen spritzgießen. Trotz der Gegenwart der Tetrafluorethylenpolymerisate in den Formmassen werden relevante mechanische Eigenschaften nicht verschlechtert.

**Patentansprüche**

1. Verfahren zur Herstellung flammwidriger Formmassen aus

a) 5-85 Gew.-Teilen, bezogen auf 100 Gew.-Teile a) + b) + c), eines aromatischen Polycarbonates, das gegebenenfalls bis zu 20 Mol.%, bezogen auf 100 Mol.% eingesetztes Bisphenol, eines halogenierten Bisphenols enthält,
b) 10.9-95 Gew.-Teilen, bezogen auf 100 gew.-Teile a) + b) + c), eines SAN-Pfropfpolymerisates,
c) 0-50 Gew.-Teilen, bezogen auf 100 Gew.-Teile a) + b) + c), eines thermoplastischen Polymerisates,
d) gegebenenfalls 3-15 Gew.-Teilen (pro 100 Gew.-Teile a) + b) + c)) einer organischen niedermolekularen, oligomeren oder polymeren Halogenverbindung,
e) 0,05-5 Gew.-Teilen (pro 100 Gew.-Teile a) + b) + c)) Antimontrioxid oder Antimoncarbonat,
f) 0,05-0,5 Gew.-Teilen, bezogen auf 100 Gew.-Teile der Summe von a)-f), feinteiliges Tetrafluorethylenpolymerisat mit Fluorgehalten von 65-76 Gew.-%, dadurch gekennzeichnet, daß man

I) eine wäßrige Emulsion des SAN-Pfropfpolymerisates b) mit mittleren Teilchengrößen von 0,1-2 µm und gegebenenfalls eine wäßrige Emulsion des thermoplastischen Polymerisates c) mit mittleren Teilchengrößen von 0,05-0,4 µm mit einer Dispersion eines Tetrafluorethylenpolymerisates f) mit mittleren Teilchengrößen von 0,05-20 µm vermischt, so daß das Gewichtsverhältnis von b) und gegebenenfalls c) zu f) 80-99,9 zu 20-0,1 (bezogen auf die Polymerfeststoffe) ist,
II) aus dieser Mischung die Polymeren durch Koagulation isoliert und trocknet und
III) das erhaltene Gemisch, gegebenenfalls nach Granulierung, mit Polycarbonat a), den Additiven d) und e) sowie gegebenenfalls weiterem Pfropfpolymerisat b) und gegebenenfalls weiterem Vinylmonomerpolymerisat c) in der Schmelze vermischt und thermoplastisch verarbeitet.

2. Verfahren gemäß Anspruch 1, dadurch gekennzeichnet, daß das aromatische Polycarbonat a) als halogeniertes Bisphenol Tetrabrombisphenol-A enthält.

**Claims**

1. Process for the production of flame-resistant moulding compositions from

a) 5-85 parts by weight, based on 100 parts by weight of a) + b) + c), of an aromatic polycarbonate which optionally contains up to 20 mol%, based on 100 mol% of the bisphenol used, of a halogenated bisphenol,
b) 10.9-95 parts by weight, based on 100 parts by weight of a) + b) + c), of a SAN graft polymer,
c) 0-50 parts by weight, based on 100 parts by weight of a) + b) + c), of a thermoplastic polymer,
d) optionally 3-15 parts by weight (per 100 parts by weight of a) + b) + c)) of an organic, low molecular weight, oligomeric or polymeric halogen compound,

e) 0.05-5 parts by weight (per 100 parts by weight of a) + b) + c)) of antimony trioxide or antimony carbonate,

f) 0.05-0.5 parts by weight, based on 100 parts by weight of the sum of a)-f), of a finely divided tetrafluoroethylene polymer with fluorine contents of 65-76 % by weight, characterised in that

I) an aqueous emulsion of the SAN graft polymer b) with average particle sizes of 0.1-2 μm and optionally an aqueous emulsion of the thermoplastic polymer c) with average particle sizes of 0,05-0.4 μm is mixed with a dispersion of a tetrafluoroethylene polymer f) with average particle sizes of 0.05-20 μm, so that the weight ratio of b) and optionally c) to f) is 80-99.9 to 20-0.1 (based on the polymer solids),

II) the polymers are isolated from this mixture by coagulation and dried and

III) the resulting mixture, optionally after granulation, is mixed in the melt with polycarbonate a), the additives d) and e) and optionally additional graft polymer b) and optionally additional vinyl monomer polymer c) and thermoplastically processed.

2. Process according to Claim 1, characterised in that the aromatic polycarbonate a) contains tetrabromobisphenol A as the halogenated bisphenol.


**Revendications**

1. Procédé de production de mélanges à mouler résistant à la flamme, à partir de

a) 5 à 85 parties en poids, pour 100 parties en poids de a) + b) + c), d'un polycarbonate aromatique qui contient éventuellement jusqu'à 20 moles %, par rapport à 100 moles % de bisphénol utilisé, d'un bisphénol halogéné,

b) 10,9 à 95 parties en poids, pour 100 parties en poids de a) + b) + c), d'un polymère greffé de SAN,

c) 0 à 50 parties en poids, pour 100 parties en poids de a) + b) + c), d'un polymère thermoplastique,

d) le cas échéant, 3 à 15 parties en poids (pour 100 parties en poids de a) + b) + c)) d'un composé halogéné oligomère ou polymère organique de bas poids moléculaire,

e) 0,05 à 5 parties en poids (pour 100 parties en poids de a) + b) + c)) de trioxyde d'antimoine ou de carbonate d'antimoine,

f) 0,05 à 0,5 partie en poids, pour 100 parties en poids de la somme de a) à f), d'un polymère de tétrafluoréthylène en fines particules avec des teneurs en fluor de 65 à 76 % en poids, caractérisé en ce que :

I) on mélange une émulsion aqueuse du polymère greffé de SAN b) en particules de grosseurs moyennes de 0,1 à 2 μm, et le cas échéant, une émulsion aqueuse du polymère thermoplastique c) en particules de grosseurs moyennes de 0,05 à 0,4 μm, avec une dispersion d'un polymère de tétrafluoréthylène f) en particules de grosseurs moyennes de 0,05 à 20 μm, de manière que le rapport des poids de b) et, le cas échéant, de c) à f) ait une valeur de 80-99,9 à 20-0,1 (par rapport aux matières solides polymériques),

II) on isole les polymères de ce mélange par coagulation et on les sèche et

III) on mélange à l'état fondu le mélange obtenu, le cas échéant après granulation, avec le polycarbonate a), les additifs d) et e) ainsi que, le cas échéant, un rajout de polymère greffé b) et, le cas échéant, un rajout de polymère de monomères vinyliques c) et on le met en œuvre à l'état thermoplastique.

2. Procédé suivant la revendication 1, caractérisé en ce que le polycarbonate aromatique a) contient comme bisphénol halogéné du tétrabromobisphénol A.